Europäisches Patentamt

European Patent Office

Office européen des brevets

(11) Publication number: **0 497 153 A1**

(19)

# EUROPEAN PATENT APPLICATION

(21) Application number: **92100661.5**

(22) Date of filing: **16.01.92**

(51) Int. Cl.5: **B23Q 7/14**

(30) Priority: **01.02.91 JP 33615/91**
    **16.05.91 JP 141109/91**

(43) Date of publication of application:
    **05.08.92 Bulletin 92/32**

(84) Designated Contracting States:
    **CH DE FR GB IT LI NL**

(71) Applicant: **MEISHO FASCOM Co., Ltd.**
    **1567-5, Oaza-hakonegasaki, Mizuho-machi**
    **Nishitama-gun, Tokyo(JP)**

(72) Inventor: **Furuya, Harumi**
    **1-3-2, Momoi, Suginami-ku**
    **Tokyo(JP)**

(74) Representative: **Klingseisen, Franz, Dipl.-Ing.**
    **Dr. F. Zumstein Dipl.-Ing. F. Klingseisen**
    **Bräuhausstrasse 4**
    **W-8000 München 2(DE)**

(54) Work station device for automatic assembly, assembly line and circular-type work station device for automatic assembly.

(57) A work station device for automatic assembly according to the present invention comprises an uniaxial robot (7) positioned on a horizontally placed slide plate (71) which is capable of moving in a certain stroke and is located on a base (8), and a main body (D) of the work station device fixed to the slide plate (71) via a braket (72). The main body (D) of the work station device comprises a pair of belt conveyors (3) extending parallel on both sides in the forwarding direction, and in between the conveyors, there are a first air cylinder (6) comprising positioning pins (61) and a second air cylinder (5) comprising lock pins (51). The positioning-locking means (C) is fixed to the case of the main body (D) of the work station device, which comprises stop plates (42) along the belt conveyors (3). A pallet (2) is placed on the pair of belt conveyors (3), which comprises a workpiece positioning place (21) in the center thereof and concaves (22) formed at the front and the rear edges thereof along the carrying direction, to which the positioning pins (61) are connected. The pallet (2) carried by the pair of belt conveyors (3) is stopped by the positioning pins (61), then it is pushed by the lock pins (51) in the upward direction until it makes firm contact with the stop plates (42). The device according to the present invention comprises a function for positioning a workpiece required for an automatic assembly. The device enables a completion of a number of assembly within the device, including a process of forwarding workpieces prior to and after each assembly work.

The assembly line comprising the work station device for automatic assembly according to the present invention is such that a plural number of the devices are positioned along an assembly line, which improves an efficiency of operation.

FIG.I

The assembly line comprising the work station device for automatic assembly according to the present invention is such that a plural number of the devices are positioned along an assembly line, which improves an efficiency of operation.

The circular-type work station device for automatic assembly comprises such device as described above, a bottom carrier comprising belt conveyors positioned below the device along the device in parallel, and lifts, each of them connectes the edges of the device and the bottom carrier, said lift comprising belt conveyors and an elevator capable of moving up and down. According to this device, a workpiece circulates and a number of assembly including a transportation of the workpiece prior to and after the assembly work is completed.

## Background of the Invention

Prior to the present invention, an automatic assembly is designed as such that after a plan of an assembly line is finished, each automatic assembly machine is decided where to fix, pallets for carrying workpieces are decided, controllers are decided and positioning of each means is decided, each according to the general method, so that a lot of work for planning and designing is required.

Further, long belt conveyors are applied to the assembly line, and workpieces are carried by the long conveyors, and at each assembly station, a workpiece is picked up from the assembly line and work is applied to the workpiece by an automatic assembly machine, then the workpiece is returned to the line and is carried to the next station. Therefore, until the whole manufacture completes, the process of picking up and returning the workpiece is overly repeted.

The prior art described above composes the problems listed below.

(1) Huge amount of time for making plans and designs of the line, positioning of each machine, pallets, controllers and so on, is required. Also, a big space for building the assembly line is required.

(2) Once assembly line and automatic assembly machines are fixed or planned, adding, removing or changing any work process and machine is difficult. In case such is requested, the whole plan or construction has to be done from the beginning.

(3) The assembly line and machines or parts attached thereto are usually large-scale, so that costs for such as installation and maintenance are considerably high.

(4) A workpiece is carried by the belt conveyor and when it reaches to each work station, it is removed from the conveyor, and after work is applied thereto, it is returned to the conveyor. Such function requires time for removing and returning the workpiece, which is a disadvantage when the efficiency of the assembly is concerned.

## Object of the Invention

The object of the present invention is to provide a work station device for automatic assembly which enalbes easy assembly work such as automatic screw, solder and injection of substances such as grease, an assembly line comprising said device and a circular-type work station device for automatic assembly.

## Brief Description of the Drawings

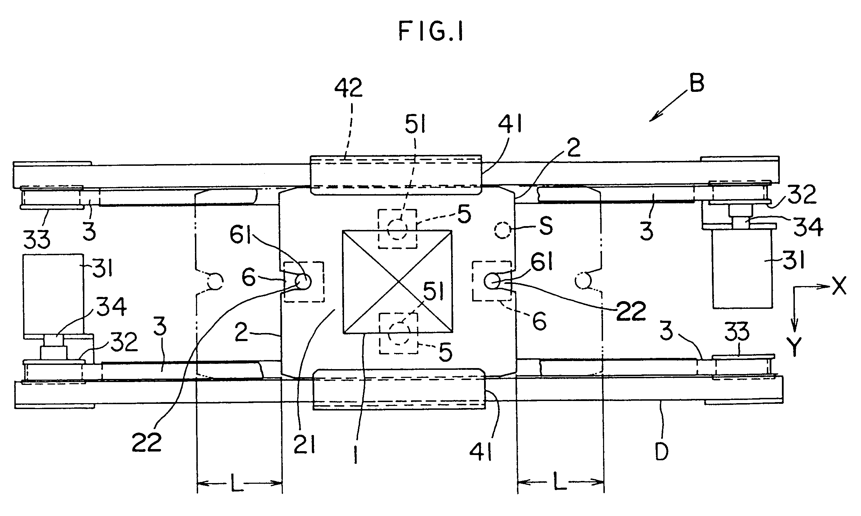

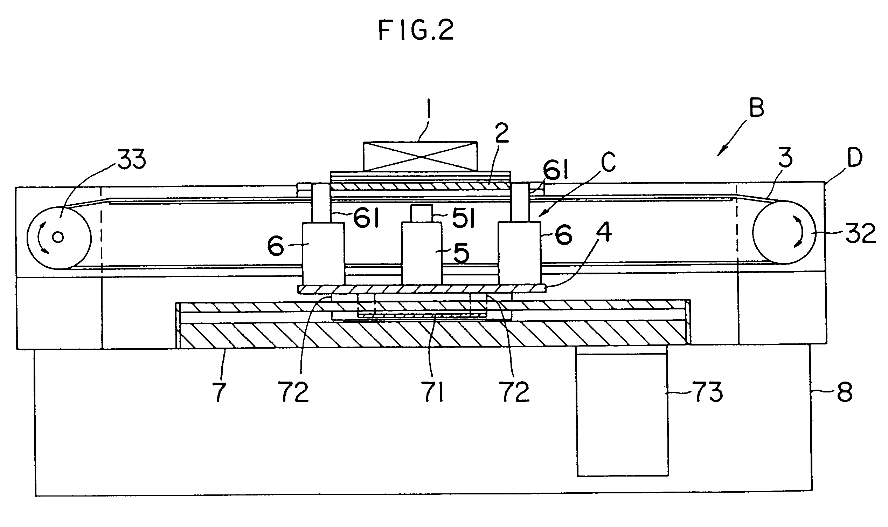

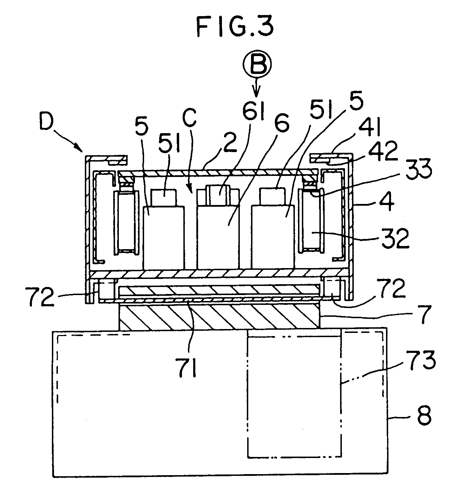

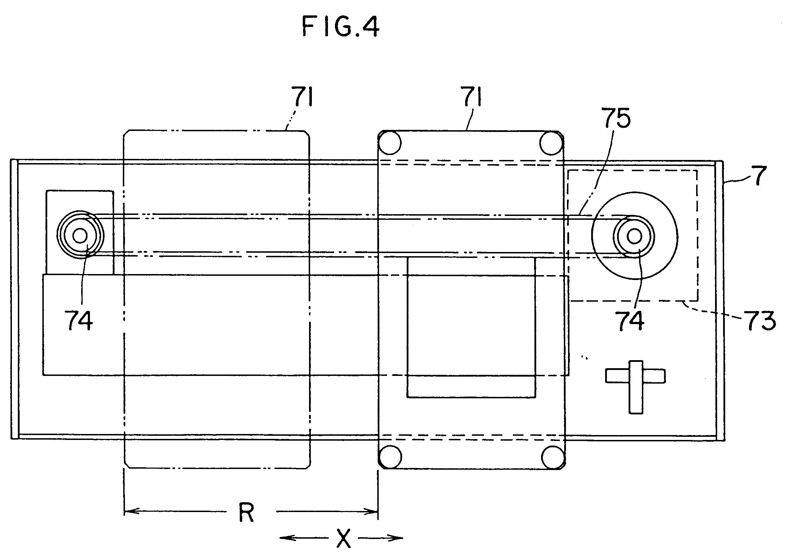

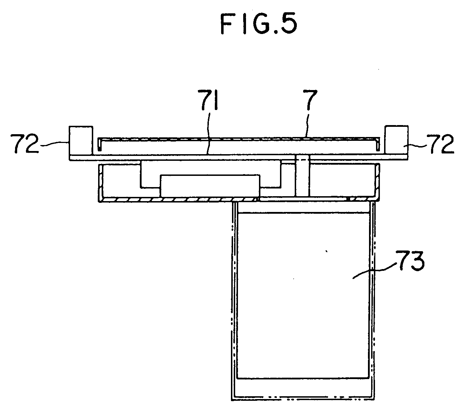

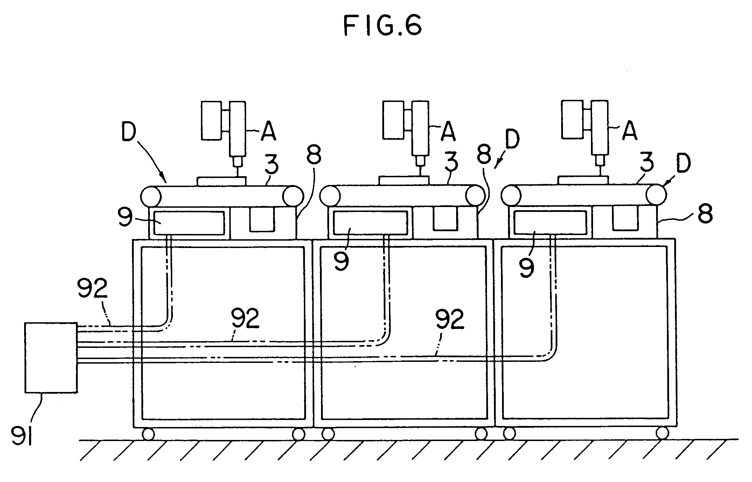

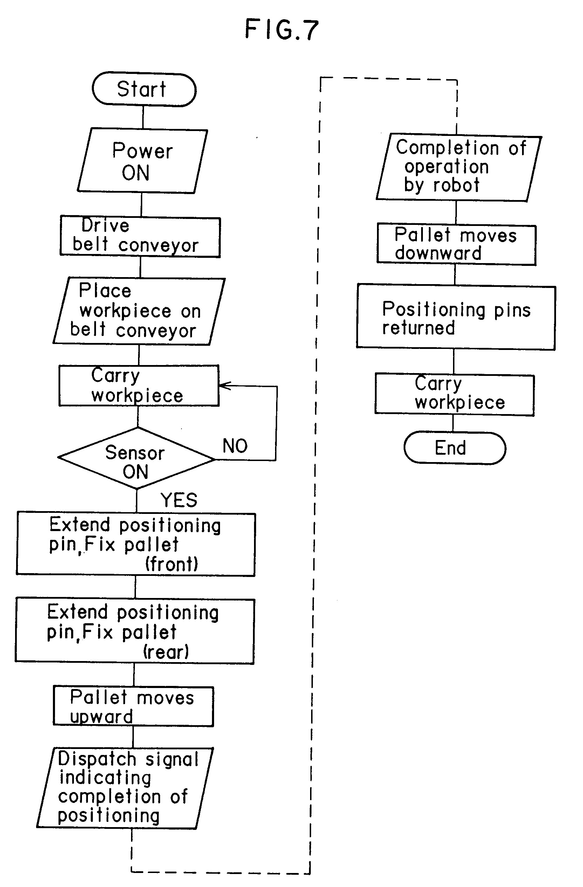

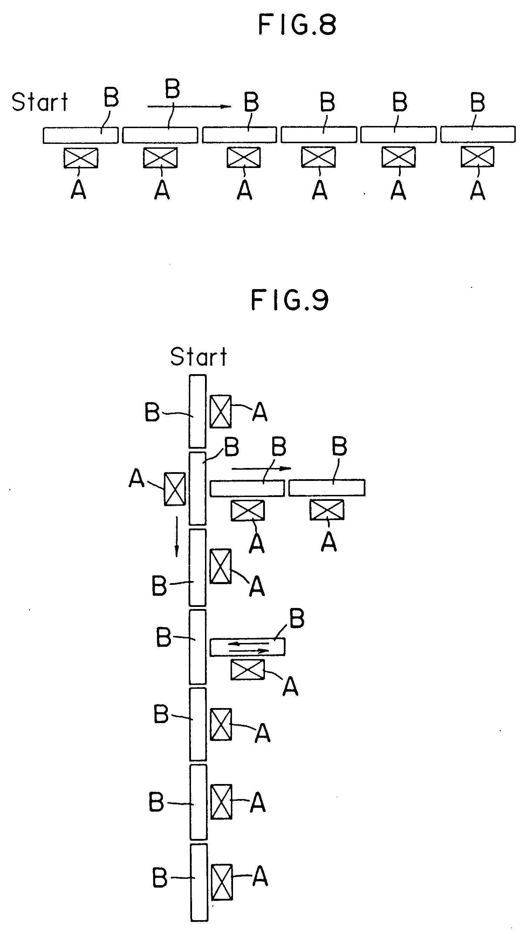

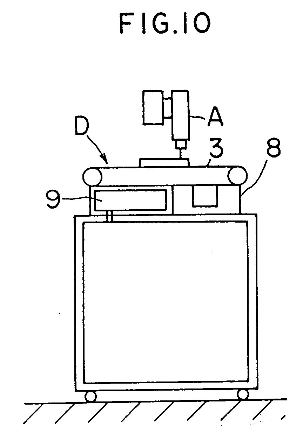

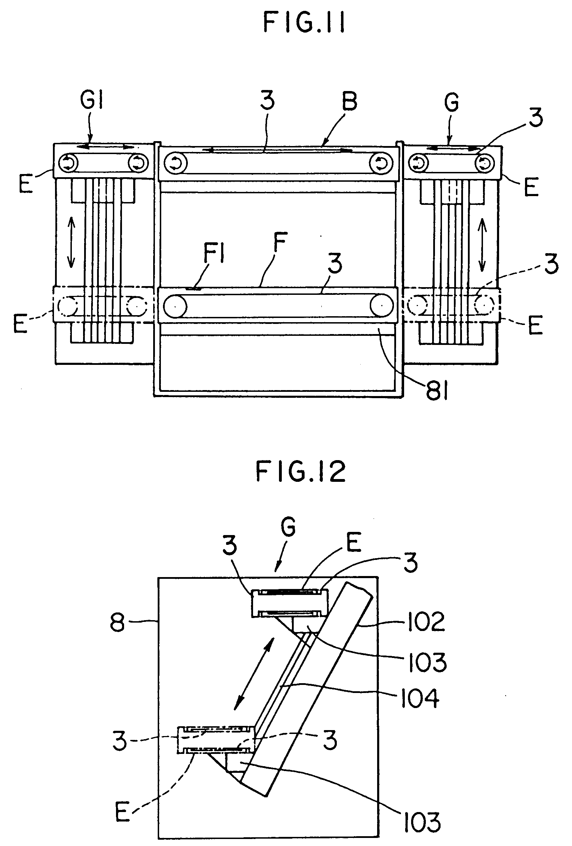

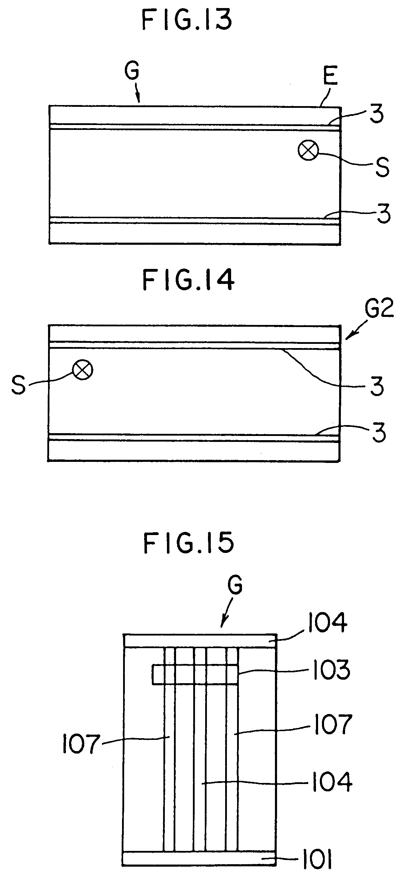

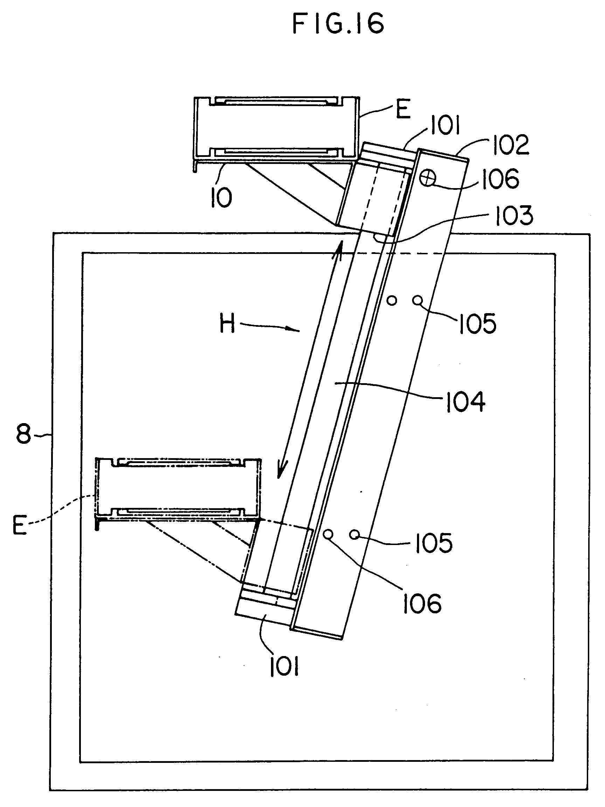

Fig. 1 shows a top view of a work station device for automatic assembly according to the present invention, Fig. 2 shows an elevational view of the same device, Fig. 3 shows a partial sectional view of the same device, Fig. 4 shows a top view of an uniaxial robot according to the present invention, Fig. 5 shows a partial sectional view of the robot, Fig. 6 shows a schematic illustration of combined device according to the present invention, Fig. 7 shows a flow-chart indicating the process of the device according to the present invention, Fig. 8 shows a schematic illustration of first preferred embodiment of an assembly line according to the present invention, Fig. 9 shows a schematic illustration of second preferred embodiment of the assembly line according to the present invention, Fig. 10 shows a schematic illustration of first preferred embodiment of the work station device for automatic assembly according to the present invention, Fig. 11 shows a schematic illustration of a circular-type work station device for automatic assembly according to the present invention, Fig. 12 shows a side elevatinal view of the circular-type work station device for automatic assembly, Fig. 13 shows a top view of an elevator of a right lift of the circular-type work station device, Fig. 14 shows a top view of an elevator of a left lift of the circular-type work station device, Fig. 15 shows an elevational view of the right lift of the circular-type work station device for automatic assembly, Fig. 16 shows a side elevational view from right side of the right lift of the circular-type work station device for automatic assembly.

## Detailed Description of the Invention

The work station device for automatic assembly according to the present invention comprises an uniaxial robot positioned on a horizontally placed slide plate which is capable of moving in a certain stroke and is located on a base, and a main body of the work station device fixed to the slide plate via a braket. The main body of the work station device comprises a pair of belt conveyors extending parallel on both sides in the forwarding direction, and in between the conveyors, there are a first air cylinder comprising positioning pins and a second air cylinder comprising lock pins. The positioning-locking means is fixed to the case of the main body of the work station device, which comprises stop plates along the belt conveyors. A pallet is placed on the pair of belt conveyors, which comprises a workpiece positioning place in the center thereof and concaves formed at the front and the back edges thereof along the carrying direction, to which the positioning pins are connected. The pallet carried by the pair of belt conveyors is stopped by the positioning pins, then it is pushed by the lock pins in the upward direction until it makes firm contact with the stop plates. The device according to the present invention comprises a function for positioning a workpiece required for an automatic assembly.

The base comprises an air tank to which required quantity of air is consistantly provided from an air supply tank.

The assembly line comprising the work station device for automatic assembly according to the present invention is such that a plural number of the devices are positioned along an assembly line, which improves an efficiency of operation.

The function of the work station device for automatic assembly and the assembly line will be described below.

The work station device for automatic assembly is constituted as described above, so that the pallet carrying a workpiece thereon is transported by the belt conveyors to a certain position, then a censor transmits a signal to function the first and second air cylinders, indicating that the pallet has reached to the certain position.

The first process of fixing the pallet is accomplished such that when the pallet reaches to the certain position, the positioning pins of the first air cylinders extend upward and the front positioning pin goes into the front concave and it stops the pallet, then the back positioning pin of the first air cylinder extends and goes into the back concave. Then the lock pins of the second air cylinders extend upward and push the pallet tightly to the stop plates.

The second process of fixing the pallet is completed as such that while the pallet is tightly fixed to the stop plates, the slide plate of the uniaxial robot is moved, which moves the main body of the work station device.

A certain position of the pallete, that is an assembly position, is determined by the fixed position thereof and a moved distance of the slide plate. In other words, the position of the pallet is determined by the first and second processes as described above.

After completion of the assembly work at the certain position, the pallet is set free and returned on the belt conveyors, and the conveyors move either in the forward or back direction carrying the pallet to a next assembly station. Fig. 7 shows a flow-chart of the device according to the present invention.

The work station device for automatic assembly and the assembly line comprising said device have the following effects.

(1) A workpiece is fixed without removing from the belt conveyors, so that each assembly work at each station can be finished efficiently. The device unnecessiates the process of removing a workpiece from the assembly line and returning it to the line, so that the efficiency of the assembly improves.

Further, a pallet is stabilized firmly and carried for a distance, so that a number of assembly work can be accomplished at each station.

(2) The prior art required a lot of time for design and installation of an assembly line and equipment such as assembly machines, palletes and controllers. The present invention shortens such time. The prior art required a huge space for a installation of an assembly line. The present invention requires much less space.

(3) According to the present invention, processes applied to an assembly line can be added, removed and changed easily, so that any type of assembly lines are satisfactory installed.

(4) Time for construction shortens, and costs such as installation cost, facility cost, maintenance cost can be kept lower.

(5) The device according to the present invention satisfy any needs required for different design of lines, so that generalization of the work station device for automatic assembly can be achieved.

(6) Design and construction of each process can be done separately, so that the structure thereof can be simplified and lightened, which brings an easy installation and handling of the device.

(7) The device is compact, lightened and simplified, so that changing the device with another device and repairing the device can be completed quickly.

(8) The device mounted on an assembly line can be removed from the line and it can be mounted on another assembly line.

(9) Spair air tanks are provided to the base, so that air supply trouble is prevented.

A circular-type work station device for automatic assembly according to the present invention will be described below.

The circular-type work station device for automatic assembly according to the present invention comprises a work station device for automatic assembly. The work station device for automatic assembly comprises an uniaxial robot positioned on a horizontally placed slide plate which is capable of moving in a certain stroke and is located on a base, and a main body of the work station device is connected to the slide plate via a braket. The main body of the work station device comprises a pair of belt conveyors extending parallel on both sides in the forwarding direction, and in between the conveyors, there are a first air cylinder comprising positioning pins and a second air cylinder comprising lock pins. The positioning-locking means is fixed to the case of the main body of the work station device, which comprises stop plates along the belt conveyors. A pallet is placed on the pair of belt conveyors, which comprises a workpiece positioning place in the center thereof and concaves formed at the front and the back edges thereof along the carrying direction, to which the positioning pins connecte. The pallet carried by the pair of belt conveyors is stopped by the positioning pins, then it is pushed by the lock pins in the upward direction until it makes firm contact with the stop plates. The device according to the present invention comprises a function for positioning a workpiece required for an automatic assembly.

The base comprises an air tank to which required quantity of air is consistantly provided from an air supply tank.

The assembly line comprising the work station device for automatic assembly according to the present invention is such that a plural number of the devices are positioned along an assembly line, which improves an efficiency of operation.

The circular-type work station device for automatic assembly comprises a bottom carrier comprising belt conveyors positioned below the device along the device in parallel.

The device further comprises lifts, each of them connectes the edges of the device and the bottom carrier comprising belt conveyors and an elevator capable of moving up and down.

The function of the circular-type work station device for automatic assembly will be described below.

A pallet is carried by a pair of belt conveyors of the work station device near to the right lift, then a pair of belt conveyors of the right lift begins to rotate. When the pallet reaches to the rihgt lift, an upper sensor perceives it and a piston moves downward carrying the elevator and the pallet thereon to the right side of the bottom carrier. There, the pair of belt conveyors of the right lift rotates and send the pallet to the bottom carrier.

The pallet is carried by a pair of belt conveyors of the bottom carrier to the left lift. When the pallet is carried on the elevator of the left lift, the lower sensor perceives it and a piston thereof moves upward. Then, the pallet is carried by the belt conveyors of the work station device again.

A plural number of assembly machines are installed by the device, so that each assembly work by each machine can be applied to the workpiece while the workpiece circulates a number of times around the device.

The effect of the circular-type work station device is such that assembly of a workpiece can be completed by a single device, so that efficiench of work considerably improves.

Preferred Embodiment of the Invention

A preferred embodiment of the present invention will be described below referring the drawings.

Fig. 1 to 3 shows a work station device for automatic assembly B according to the present invention. As shown in Fig. 3, the device comprises an uniaxial robot 7 fixed to a base 8 and comprising a slide plate 71 capable of moving a certain stroke, and a main body of the device D attached to the slide plate 71 via brakets 72.

As shown in Fig. 4 and 5, the uniaxial robot 7 installed on the base 8 comprises the horizontal slide plate 71, which is capable of moving in the directions of X (Fig. 4).

The uniaxial robot 7 comprises its both sides gears 74, and a belt 75 is suspended between the gears 74. The slide plate 71 is fixed to the belt 75 which moves in a certain stroke R. Either one of the gears 74 is driven by the motor 73. The slide plate 71 moves in the stroke R.

The uniaxial robot 7 may be arranged to move not only in the directions of X but also in the directions of Y. By combining a number of robots 7, a variety of movement of the main body D of the work station device is possible.

On the slide plate 71, the main body D of the work station device for automatic assembly is installed via brakets 72.

The carrier of the main body D of the work station device comprises its both side a pair of belt conveyors 3 set parallel with each other in the forwarding direction. The belt conveyors 3 rotate by the power of the motor 34 via pulleys 32, 33 and rotary axis 34.

The motor 31 is a induction servomotor which revolves both clockwise and counterclockwise.

Between the pair of belt conveyors 3, there is a positioning-locking means C for a pallet 2 (Fig. 2, 3). The positioning-locking means C comprises a sensor S which dispatches a signal when a workpiece 1 on the pallet 3 reaches to a certain point, a first and second cylinders 6, 5 and stop plates 42 fixed to the case 4 of the main body D.

Two first air cylinders 6, each comprising a positioning pins 61, are installed in the forwarding direction, one in the front position and the other in the rear position. The second air cylinders 5, each comprising a lock pin 51, are installed at right angles against the forwarding direction.

To stably support the pallet 2, the device should comprise a plural number of second air cylinders 5.

The case of the main body D comprises horizontal plates 41, and a stop plate 42 is horizontally attached to each plate 41, at the position a pallet 2 stops, along the line of the conveyors 3. The upper surface of a pallet 2 is forced to touch to the stop plate 42, and it is firmly fixed thereto.

A pallet 2 carries a workpiece to which assembly work is applied by assembly machines A, and the pallet 2 is carried by a pair of belt conveyors 3 (Fig. 6).

In the center of the pallet 2, there is a workpiece positioning place 21. At the front and the rear portions of the pallet 2, a concave 22 is formed. The positioning pin 61 inserts into the concave 22.

The concaves 22 are positioned corresponding to the positioning pins 61. According to the preferred embodiment, the first air cylinder 6 is installed in the front and the rear positions in the forwarding direction, and the pallet 2 is arranged to be held at its front and back by the positioning pins 61.

A sensor S inspects the exsistance of a pallet 2. When a pallet 2 reaches to a certain point, the sensor S dispatches a signal which drives the first and second air cylinders 6, 5.

As shown in Fig. 6, air tanks 9 are installed on the base 8. Compressed air applied to the first and second air cylinders 6, 5 is supplied to the tanks 9 from the air supply tank 91 through the tubes 92. The required quantity of compressed air is charged in the tanks 9, which prevents lack of air.

The assembly line according to the present invention, as shown as in the first preferred embodiment of the invention in Fig. 8, a plural number of work station devices for automatic assembly B are positioned in a series to forward workpieces smoothly, and an automatic assembly machine A is installed by each of the device B. The number of the device B and the direction of the assembly line determined by the devices B can be arranged freely optionally.

The assembly line according to the present invention can be arranged as such as shown as the second preferred embodiment of the invention in Fig. 9. From the main assembly line determined by the devices B, a number of lines also determined by the devices B run in the right angle direction.

The assembly line according to the present invention can be arranged round shape by placing the devices B in such manner.

The preferred embodiment of the circular-type work station device for automatic assembly according to the present invention will be described below.

As shown in Fig. 11, the circular-type work station device for automatic assembly comprises a bottom carrier F on the horizontal base 81, which is set parallel to the base 8 and the work station device B.

The bottom carrier F comprises a pair of belt conveyors 3 similar to the one installed to the elevator E described previously, which is capalbe of rotating in the clockwise and the counterclockwise directions. The bottom carrier F also comprises a sensor F1 which perceives the existence of a pallet 2.

As shown in Fig. 11, 12, 15 and 16, to the both sides of the work station device B, the right lift G and the left lift G1 are connected respectively, each comprising an elevator E capable of moving upward and downward.

The lift G, G1, comprises an air cylinder H fixed to the base plate 102. The air cylinder H is provided with a lift E similar to the one installed to the work station device B.

Both sides of the air cylinder H, there are guides 107 for preventing the piston 103 from unintentional movement in the side directions. The stopper 101 is installed in the top and the bottom portion of the piston 103. A limit switch 106 is also installed to control the movement of the piston 103.

A pallet 2 is carried by a pair of belt conveyors 3 of the work station device B close to the right lift G, then a pair of belt conveyors 3 of the right lift G begin to rotate. When the pallet 2 reaches to the rihgt lift G, an upper sensor 106 perceives it and a piston 103 moves downward carrying the elevator E and the pallet 2 thereon to the right side of the bottom carrier F. There, the pair of belt conveyors 3 of the right lift G rotates and send the pallet 2 to the bottom carrier F.

The pallet 2 is carried by a pair of belt conveyors 3 of the bottom carrier F to the left lift G1. When the pallet 2 is carried on the elevator E of the left lift G1, the lower sensor 106 perceives it and a piston 103 thereof moves upward. Then, the pallet 2 is carried by the belt conveyors 3 of the work station device B again.

A plural number of assembly machines A are installed by the device B, so that each assembly work by each machine A can be applied to the workpiece while the workpiece 1 circulates a number of times around the device B.

**Claims**

1. A work station device for automatic assembly comprising:

an uniaxial robot positioned on a horizontally placed slide plate capable of moving in a certain stroke located on a base;

and a main body of the work station device fixed to the slide plate via a braket;

said main body of the work station device comprising a pair of belt conveyors extending parallel with each other on both sides in the forwarding direction;

in between said conveyors, there are a first air cylinder comprising positioning pins and a second air cylinder comprising lock pins, a positioning-locking means being fixed to the case of the main body of the work station device, comprising stop plates along the belt conveyors, said belt conveyors being arranged to carry a pallet comprising a workpiece positioning place in the center thereof and concaves formed at the front and the rear edges thereof along the carrying direction, to which the positioning pins are to be connected, said pallet carried by the pair of belt conveyors being arranged to be stopped by the positioning pins, said pallet being arranged to be pushed by the lock pins in the upward direction until it makes firm contact with the stop plates.

2. A work station device for automatic assembly claimed in claim 1 wherein said base comprising an air tank, in which a required quantity of air is being supplied from an air supply tank.

3. An assembly line being optionally arranged corresponding to a flow of workpieces by the work station devices claimed in claim 1 and 2.

4. A circular-type work station device for automatic assembly comprising:

an uniaxial robot positioned on a horizontally placed slide plate capable of moving in a certain stroke located on a base;

and a main body of the work station device fixed to the slide plate via a braket;

said main body of the work station device comprising a pair of belt conveyors extending parallel with each other on both sides in the forwarding direction;

in between said conveyors, there are a first air cylinder comprising positioning pins and a second air cylinder comprising lock pins, a positioning-locking means being fixed to the case of the main body of the work station device, comprising stop plates along the belt conveyors, said belt conveyors being arranged to carry a pallet comprising a workpiece positioning place in the center thereof and concaves formed at the front and the rear edges thereof along the carrying direction, to which the positioning pins are to be connected, said pallet carried by the pair of belt conveyors being arranged to be stopped by the positioning pins, said pallet being arranged to be pushed by the lock pins in the upward direction until it makes firm contact with the stop plates;

a bottom carrier comprising belt conveyors positioned below the device along the device in parallel;

and lifts, each connecting the edges of the device and the bottom carrier, said lift comprising belt conveyors and an elevator capable of moving up and down.

FIG.I

FIG.2

# FIG.3

# FIG.4

71  71  75  7

74  74  73

R

X

EP 0 497 153 A1

# FIG.5

FIG.6

# FIG.7

Start

Power ON

Drive belt conveyor

Place workpiece on belt conveyor

Carry workpiece

Sensor ON → NO

YES

Extend positioning pin, Fix pallet (front)

Extend positioning pin, Fix pallet (rear)

Pallet moves upward

Dispatch signal indicating completion of positioning

Completion of operation by robot

Pallet moves downward

Positioning pins returned

Carry workpiece

End

# FIG.8

# FIG.9

# FIG.IO

# FIG.11

# FIG.12

# FIG.13

# FIG.14

# FIG.15

# FIG.16

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-2 121 646 (ROBERT BOSCH)<br>* page 4, line 5 - line 21; figure 3 *<br>--- | 1 | B23Q7/14 |
| Y | US-A-2 536 412 (C.F. BAMFORD)<br>* claim 1; figures 1,2 *<br>--- | 1 | |
| A | PATENT ABSTRACTS OF JAPAN<br>vol. 10, no. 70 (M-462)(2127) 19 March 1986<br>& JP-A-60 213 458 ( MIYANO TEKKOSHO K. K. )<br>* abstract *<br>--- | 4 | |
| A | PATENT ABSTRACTS OF JAPAN<br>vol. 10, no. 167 (M-488)(2223) 13 June 1986<br>& JP-A-61 018 612 ( HITACHI KINZOKU K. K. )<br>* abstract *<br>----- | 1 | |
| | | | **TECHNICAL FIELDS SEARCHED (Int. Cl.5 )**<br><br>B23Q<br>B61G<br>B65G |

The present search report has been drawn up for all claims

| Place of search | Date of completion of the search | Examiner |
|---|---|---|
| THE HAGUE | 07 MAY 1992 | RAMBAUD P.M.J. |